# EUROPEAN PATENT SPECIFICATION

(11) **EP 2 130 388 B1**
(45) Date of publication and mention of the grant of the patent: **28.09.2011**
(21) Application number: 08736796.7
(22) Date of filing: 28.03.2008
(51) Int. Cl.: H04L 12/58

(54) **COMPATIBILITY OF INSTANT MESSAGING IN COMMUNICATIONS SYSTEM**
KOMPATIBILITÄT VON SOFORTIGER NACHRICHTENÜBERMITTLUNG IN EINEM KOMMUNIKATIONSSYSTEM
COMPATIBILITÉ DE MESSAGERIE INSTANTANÉE DANS UN SYSTÈME DE COMMUNICATION

(30) Priority: 30.03.2007 FI 20075210
(43) Date of publication of application: 09.12.2009
(73) Proprietor: TeliaSonera AB, 10663 Stockholm (SE)
(72) Inventor: LINDQVIST, Vesa, FI-00810 Helsinki (FI); PAHLMAN, Sauli, FI-00560 Helsinki (FI)
(74) Representative: Äkräs, Tapio Juhani
(86) International application number: PCT/FI2008/050147
(87) International publication number: WO 2008/119883

(56) References cited:
- EP-A1- 1 408 705
- EP-A1- 1 732 277
- WO-A1-01/86472
- WO-A1-2006/040749
- WO-A2-01/67622
- WO-A2-01/67622
- WO-A2-03/049461
- US-A1- 2005 037 762
- US-A1- 2005 114 533
- US-A1- 2005 185 634
- US-A1- 2006 052 113
- US-A1- 2006 271 696

## Description

### FIELD OF THE INVENTION

The present invention relates to instant messaging (IM) in a communications system, and more particularly to compatibility of instant messaging with other messaging systems.

### BACKGROUND OF THE INVENTION

An instant messaging (IM) service enables online subscribers to exchange messages via the Internet. Under most conditions, instant messaging is truly "instant", and even during peak Internet usage periods, the delay is rarely more than a couple of seconds. In order to become a successful service, mobile IM service should be able to inter-work with current systems, such as a short message service (SMS). This means that a user should be able to use the service for communicating with his/her contacts irrespective of their capabilities or the technology used (i.e. IM-to-SMS and SMS-to-IM). The mobile IM should be able to reuse existing per message charging models, and project user experience of conventional messaging technologies such as SMS. In this context, the evolution of SMS towards IP based application technologies and new terminal equipment technologies is also referred to as a "future operator messaging service" (FOMS) concept.

Instant messages sent from the IM infrastructure can quite easily be forwarded to conventional SMS users as well as to offline IM users. An attempt to send a message to someone who is not online, or who is not willing to accept messages, will result in a notification that the transmission cannot be completed. This IM-to-SMS backwards compatibility can be implemented using, for example, a universal computer protocol (UCP) or a hypertext transfer protocol (HTTP) interface between an IM server and a short message service centre (SMSC). In such a case, the IM server converts the instant messages to short messages if they cannot be delivered as instant messages (i.e. in a situation where a called party is offline, or s/he does not have the IM capability). The converted instant messages are pushed to SMSC for delivery to the called party.

However, in the other direction, i.e. from SMS to IM, problems arise. For the user experience to be as good as possible, the user should be able to use an IM client as his/her only messaging tool. Therefore a system should be able to route a textual short message sent from the SMS infrastructure, to the IM server. Then the IM server should be able to forward the short message as an instant message to the IM user.

A problem to be solved is therefore how the short messages addressed to the IM user can be routed to the IM server in such a way that "normal" (SMS user destined) short messages still remain intact.

One possibility to implement the SMS-to-IM inter-working regarding the FOMS concept involves routing of messages to an instant messaging and presence service (IMPS) based on a home location register (HLR) and/or SMSC. This HLR based approach has been proposed by a number of vendors, and it involves changing the provisioning of the subscriber (in HLR) such that all short messages addressed to a certain MSISDN (mobile subscriber international integrated services digital network number) are sent to the IM server. Based on a response to a sendRoutingInformationForSM query sent by. HLR, SMS routes IM user destined short messages to the IM server. The SMS user just sends a short message using the MSISDN of the IM user, and the short message arrives at the IM user's IM client. This solution, however, involves a number of problems. The described functionality is not implemented in HLR, i.e. it is not possible to set a location [i.e. a GT (global title) address of a serving MSC (mobile switching centre)] of a given user, in this case the IM user, to any fixed value to be used only when responding to the sendRoutingInformationForSM query. In addition, regular voice calls and data SMS messages should not be routed to the IM server. Further, the IM servers do not necessarily have a GT address, or the IM servers may not be able to communicate using SS7 MAP (signalling system No. 7) or SIGTRAN (signalling transport) protocol. Therefore the SMSC software would need to be modified in order to be able to analyse a sendRoutinglnformationForSM response. Yet further, implementation at an inter-operator interconnection may be difficult. It seems that a short message originated from a first domestic or foreign operator's network may be forwarded to an MSC serving the user at second operator's network without traversing through the second operator's SMSC. In such a case, the special GT address in the HLR may cause a problem, as well as delivery reporting.

Another possibility to implement the SMS-to-IM inter-working regarding the FOMS concept involves alternative routing numbers, for example, an IMPS prefix + MSISDN, or some other identification. A number offender have proposed prefix-based routing alternatives in order to enable the routing of short messages to the IM server. This is carried out by configuring the IM server to use a prefix + MSISDN of the sender in the originating address of a mobile-terminated short message. The prefix is a short code that SMSC associated with the IM server is able to understand. This means that the receiver receives the message from the prefix + MSISDN when it cannot be delivered as an instant message. If this MSISDN is already stored in the user's address book, the handset will show an SMS coming from a respective contact name even though the phone number includes the prefix. With this approach the SMS user can reply to a message and a short message will be sent back to the IM server via SMSC. This approach enables SMS replies to be converted to IMs, but it is not suitable for the SMS users to initiate IM dialogues as the user has to write the short message with the prefix + MSISDN. The user would not be able to initiate e.g. voice or video calls during the IM dialogue due to a "false" contact number. Vendors have also proposed using an identification number instead of MSISDN. Such approach enables a basic SMS-to-IM delivery but otherwise encounters problems similar to those involved in the MSISDN approach. Thus the prefix-based routing mechanisms may only be considered as a solution suitable for non-commercial services, such as trials, since the end-user experience decreases significantly compared to current messaging services [i.e. SMS and MMS (multimedia messaging service)].

US 2006/052 113 A1 discloses mediating between a cellular telephony network and wireless LAN. The service application checks against a multidimension roaming presence server, and determines when an SRI_for_SM query is made for a relevant WiFi user. A client software receives the SMS as a text message via IP. A signalling relay module blocks the query and sends a reply to the source MSC, providing its own address as a temporary VLR address serving the WiFi user.

### BRIEF DESCRIPTION OF THE INVENTION

It is thus an object of the present invention to provide a method, a system, and a network node for implementing the method so as to overcome the above-disclosed problems. The objects of the invention are achieved by a method and an arrangement which are characterized by what is stated in the independent claims. Preferred embodiments of the invention are disclosed in the dependent claims.

The present solution is based on the idea that the system is arranged to recognise a short message that is transmitted from an SMS user to an IM user. The present solution comprises checking, in a transfer node, on the basis of a received SMS routing inquiry, whether or not the called party is capable of using instant messaging. In addition, the present solution comprises checking, in an IM server, whether or not the called party is currently online. If the called party is currently online, an instant messaging server transmits, towards the transfer node, a routing response including routing information on the instant messaging server. This routing information can then be delivered to a short message centre for the delivery of the actual short message.

An advantage of the invention is that it enables short messages that are sent to an IM user to be identified and routed to an IM server while all normal (SMS user-destined) SMS traffic is kept intact. In addition, this can be carried out transparently, so that the IM user does not notice any difference between SMS-originated and IM-originated messages received by the IM user. The present invention enables the SMS return path to be implemented for backwards compatibility.

### BRIEF DESCRIPTION OF THE DRAWINGS

In the following, the invention will be described in greater detail by means of preferred embodiments and with reference to the accompanying drawings, in which
Figure 1 illustrates a communications system according to the present invention;
Figure 2 illustrates signalling according to a first embodiment of the present invention;
Figure 3 illustrates signalling according to a second embodiment of the present invention;
Figure 4 illustrates signalling according to a third embodiment of the present invention;
Figure 5 illustrates signalling according to a fourth embodiment of the present invention;
Figure 6 illustrates functioning of a network node according to the present invention.

### DETAILED DESCRIPTION OF THE INVENTION

The IM architecture is quite complex and it may include several ref erence points to an IM client, IM server and IM XDMS [XML (extensible markup language) data management server], and also to external entities, such as an SIP/IP core, shared XDMS, aggregation proxy, presence entities, charging enabler and device management server services, to provide an overall functionality of a SIMPLE IM enabler. The IM service is dependent on an underlying SIP infrastructure transporting SIP messages between them entities. The architecture may be an SIP/IP core including an IP multimedia subsystem.

An instant messaging and presence service (IMPS) is an OMA (open mobile alliance) enabler designed for exchanging messages and presence information between mobile clients, and also between mobile and fixed clients. Use cases include: add contact by IMPS user-ID or MSISDN, search by contact details or public profile, send instant message, extend IM to a private group conversation, participate in IM to a private group conversation, add or update public profile, locate friend, auto registration and login, advanced search, multiple applications/sessions, remote user session management, sending an announcement in a chatting mode. Presence is a key-enabling technology for IMPS. It involves client device availability ("my phone is on/off". "in a call"), user status (available, unavailable, in a meeting), location, client device capabilities (voice, text, GPRS, multimedia), and searchable personal statuses such as mood (happy, angry) and hobbies (football, computing, dancing). Since the presence information is personal, it may be made available according to the user's wishes; access control features allow the users control their presence information. The instant messaging (IM) is applicable to both mobile and desktop worlds. Desktop IM client, two-way SMS, and two-way paging use the instant messaging. The IMPS client includes but is not limited to mobile hand-held and fixed terminals. IM has important functions similar to PoC. Deferred messaging is a receiver service in a terminating network. The deferred messaging guarantees that a receiver receives his/her messages, even if offline, by storing the receiver's message on a deferred function. The service is in the terminating network as the storage and manipulation of messages is a service the user's home operator is likely to be able to charge for. The user's own service provider is able to provide privacy and availability. The pager mode can utilize the deferred messaging.

One of the main principles of the FOMS concept is that the service aims to be user-centric rather than device- or technology-centric (i.e. the FOMS concept is not limited to instant messaging on mobile devices). However, the FOMS concept is an evolution of the SMS service/product concept towards IP based application technologies and towards new terminal equipment technologies. The idea of the FOMS concept is to compete with other IP based communication services on the basis of following key value propositions: backwards compatibillty to existing communication services, communication security, real customer-identity based communication, viable and-healthy transaction based charging model, and/or device independency allowing the service to be genuinely user-centric. However, device independency should not compromise the listed key value proposition element.

A challenge with device independency is that the existing service user experience (i.e. SMS) is brand agnostic to customers. In order to be able to extend the same customer experience to other devices, there should be a brand associated with the service experience (e.g. MSN Messenger on mobile, MSN Messenger on PC). Otherwise customer perception does not associate the service concept with the existing value-proposition which, in turn, hinders the service success probability.

One idea is to provide operators or service providers with a possibility to brand communication service functionalities in customer terminals. For example, a "create text message" user interface functionality could be customized as a "create [BRAND] text message" user interface.

From a technical point of view, there are several alternative ways to implement device independency. One possible enabler for FOMS is a connect platform that enables secure access to a mobile core access network independently.

In the following, preferred embodiments of the invention will be described with reference to a third generation mobile communications system, such as UMTS (universal mobile communications system), 3GPP-IMS, or 3GPP2-IMS. This invention is not, however, meant to be restricted to these embodiments. Consequently, the invention may be applied to any mobile communications system that provides a GPRS-type packet switched radio service capable of transmitting packet-switched data. Examples of other systems include the IMT-2000 and its evolution techniques [such as 3GPP LTE (Long term evolution), Beyond-3G, 4G], IS-41, GSM, or the like, such as the PCS (Personal Communication System) or DCS 1800 (Digital Cellular System for 1800 MHz). The specifications of mobile communications systems and particularly those of the IMT-2000 and the UMTS advance rapidly. This may require additional changes to the invention. For this reason, the terminology and expressions used should be interpreted in their broadest sense since they are meant to illustrate the invention and not to restrict it. The relevant inventive aspect is the functionality concerned, not the network element or equipment where it is executed.

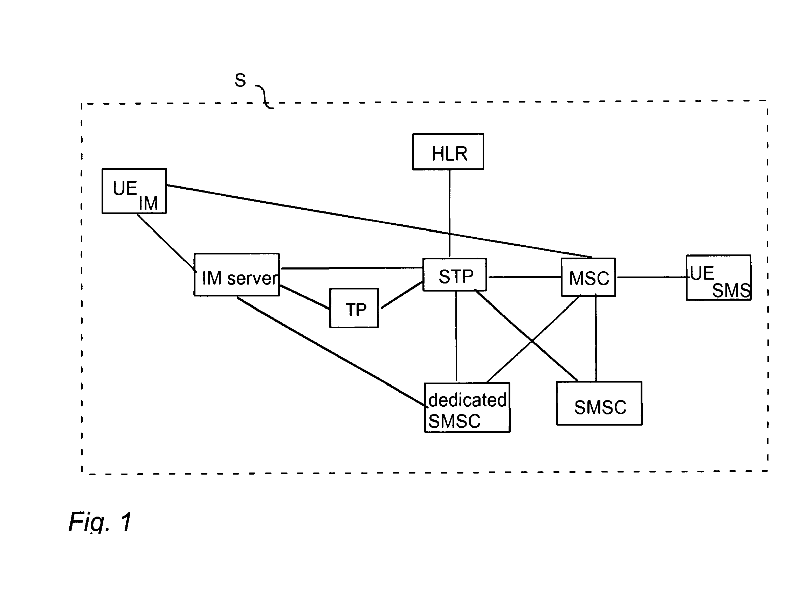

Figure 1 illustrates a communications system S according to the present solution such that only elements most relevant to the invention are included. It is apparent to a person skilled in the art that a mobile communications system also comprises other functions and structures that need not be described in greater detail in this context. The communications system S comprises a first user terminal UE_{SMS} capable of using a short message service, and a second user terminal UE_{IM}, capable of using an instant messaging service. The idea of the present invention is to configure the system S to operate in a desired way in a situation where a short message is transmitted from the first user terminal UE_{SMS} to the second user terminal UE_{IM}. Therefore the system comprises network elements that are however not necessarily mandated by the present invention. The system S thus comprises a mobile switching centre MSC, a home location register HLR, a short message service centre SMSC, and an instant messaging IM server. The system S further comprises a signalling transfer point STP for conveying signalling traffic, and a transfer point TP between the signalling transfer point and the IM server. In an embodiment, the system may also comprise a dedicated short message service centre SMSC (which may be, for example, a Linux workstation).

According to the present invention, an SMS-to-IM path is implemented using a transfer point based functionality. In the invention, a transfer point TP (e.g. Cisco ITP, or LogicaCMG Foreign Gateway) is utilized for separating messages destined to IM users from messages destined to regular SMS users. This transfer point based approach has a significant advantage as in this approach the current mobile network components do not have to be modified. The IM server should preferably be able to use SIGTRAN for signalling. As sendRoutinglnformationForSM traffic is to be routed through the transfer point TP, it may be advantageous to have two or more transfer points in the network. By means of the invention, messages to offline IM users and messages originated from foreign networks can also be handled properly. Also data messages [e.g. MMS notifications, WAP (wireless access protocol) push messages] can be handled by adding a dedicated SMSC (e.g. a regular Linux workstation) to a mobile network.

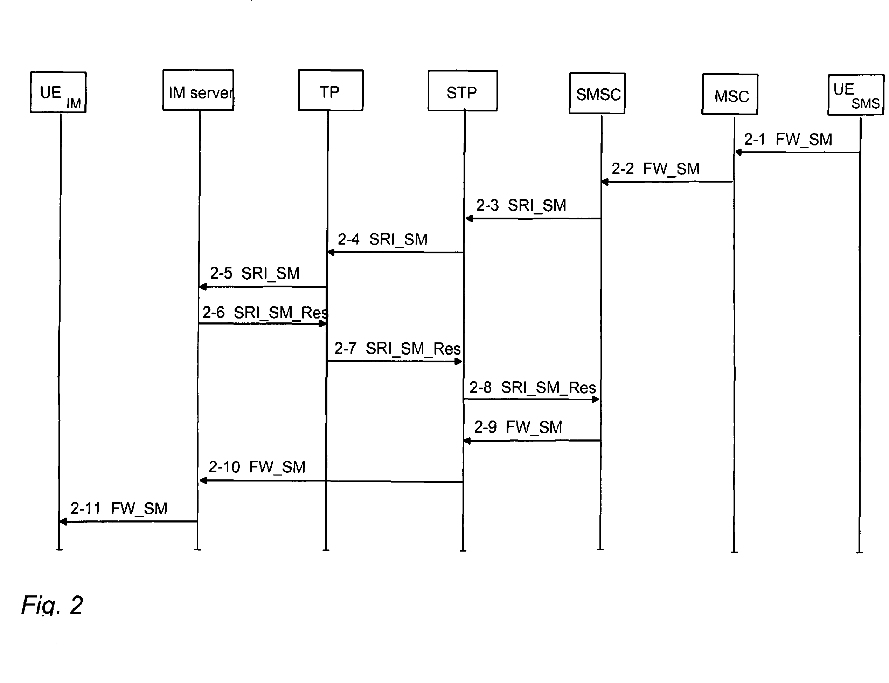

Figure 2 illustrates signalling according to a first embodiment of the present invention. In Figure 2, in a process of a short message delivery from an SMS client UE_{SMS} to an online IM client UE_{IM}, a short message FW_SM is transmitted 2-1, 2-2 from a first user terminal UE_{SMS} via a mobile switching centre MSC to a short message service centre SMSC. After receiving the short message, SMSC transmits 2-3 a sendRoutinglnformationForSM inquiry SRI_SM to a signalling transfer point STP. STP forwards 2-4 the SRI_SM inquiry [e.g. based on a specific translation type (TT)] to a transfer point TP. The transfer point TP investigates the received sendRoutinglnformationForSM inquiry. Based on the inquiry, TP determines [e.g. based on a called party address (CdPA) included in the SRI_SM request 2-4] whether or not the second user terminal, to which the short message is addressed to, is an IM-capable user terminal. If it is, TP forwards 2-5 the SRI_SM request to the IM server. Upon receipt of the request, the IM server is arranged to check whether or not the second user terminal UE_{IM} is currently online or offline. If the IM user is online, the IM server responds to the inquiry by transmitting an SRI_SM_Res message (including the address of the IM server) 2-6, 2-7, 2-8 via TP and STP to SMSC. The actual short message FW_SM is then transmitted 2-9, 2-10 from SMSC via STP to the IM server. The IM server delivers 2-11 the short message to the IM client UE_{IM}, and generates a delivery notification (not shown in Figure 2) towards SMSC.

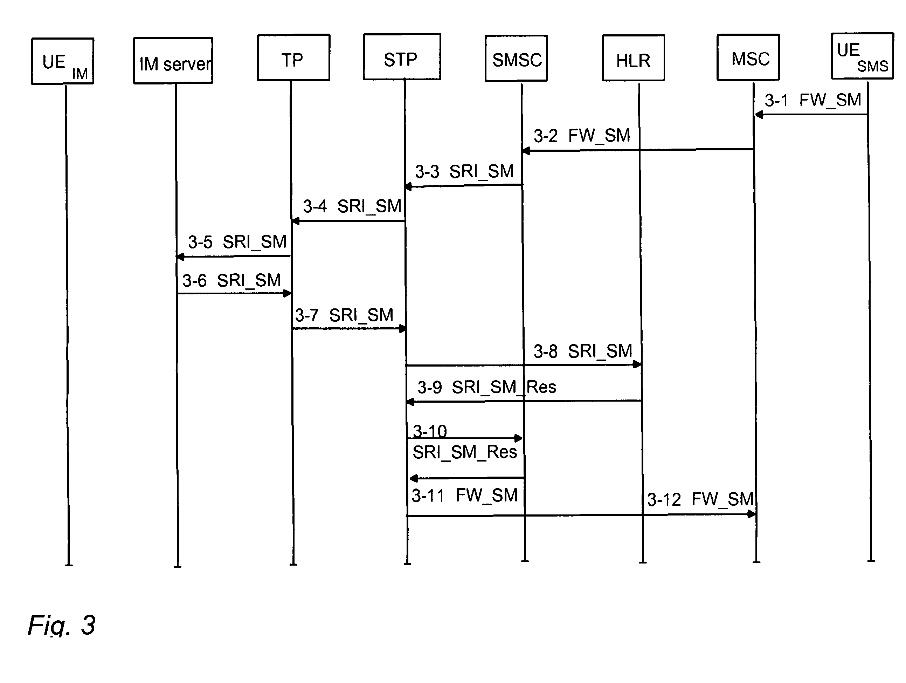

Figure 3 illustrates signalling according to a second embodiment of the present invention. If the IM user terminal UE_{IM} is offline, the short message delivery process proceeds as described above in connection with Figure 2, until a sendRoutinglnformationForSM inquiry 3-5 reaches the IM server (i.e. the signalling messages 3-1 to 3-5 in Figure 3 correspond to the signalling messages 2-1 to 2-5 in Figure 2 respectively). In Figure 3, when receiving the sendRoutinglnformationForSM inquiry 3-5, the IM server is arranged to check whether the second user terminal UE_{IM} is currently online or offline. If the IM user terminal UE_{IM} is offline, the IM server returns 3-6 the SRI_SM inquiry to the transfer point TP. The transfer point TP is configured to forward 3-7, 3-8 the returned inquiry via STP to a home location register HLR. HLR responds 3-9 to the inquiry by transmitting an SRI SM_Res message to STP, and STP forwards 3-10 the response to SMSC. SMSC sends 3-11, 3-12 the actual short message FW_SM in a mobileTerminatedForwardSM PDU (protocol data unit) message via STP to the serving MSC, and receives a delivery notification in a mobileTerminatedForwardSMResponse PDU (not shown in Figure 3). The contents of these messages is left intact.

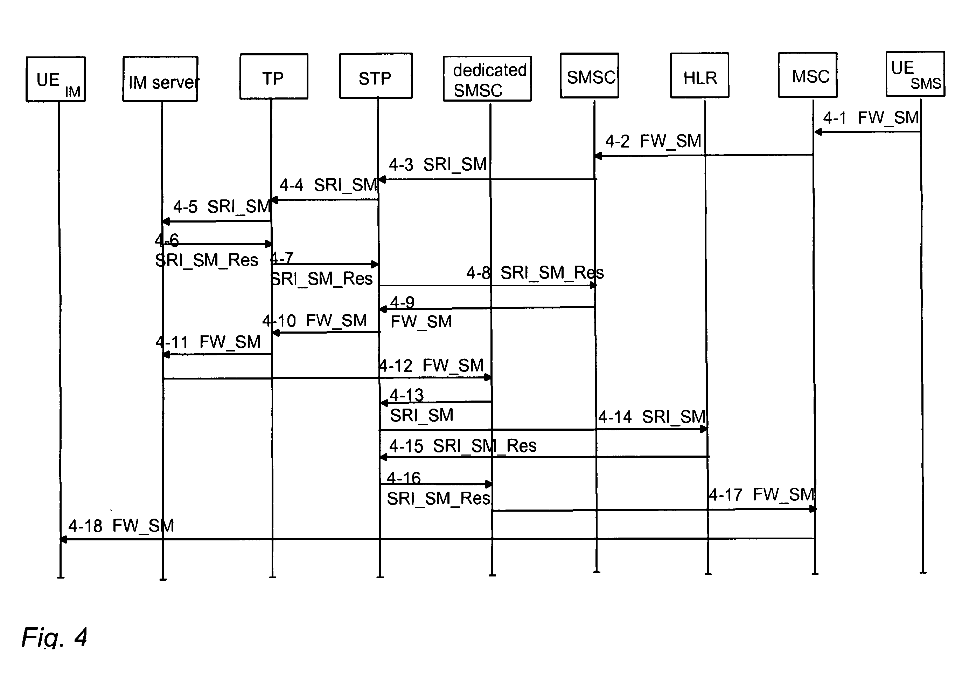

Figure 4 illustrates signalling according to a third embodiment of the present invention. If the transmitted short message is a data short message, the short message delivery process proceeds as described above in connection with Figure 2, until the actual short message (which in the case of Figure 4 is a data short message) 4-9 is received in the signalling transfer point STP (i.e. the messages 4-1 to 4-9 in Figure 4 correspond to the messages 2-1 to 2-9 in Figure 2, respectively, except that in Figure 4 the short message is a data short message). STP forwards 4-10, 4-11 the short message FW_SM (via TP??) to the IM server. In the case of a data short message, the IM server takes care of rerouting the short message. In practice, this means that the IM server forwards 4-12 the message to a dedicated SMSC for storage and/or delivery. The dedicated SMSC transmits 4-13, 4-14 a further sendRoutinglnformationForSM inquiry SRI_SM via STP to HLR. HLR responds 4-15 to the inquiry by transmitting an SRI SM_Res message to STP, and STP forwards 4-16 the response to the dedicated SMSC. The dedicated SMSC sends 4-17, 4-18 the actual short message FW_SM, via the serving MSC??, to UE_{IM}, and receives a delivery notification (not shown in Figure 4).

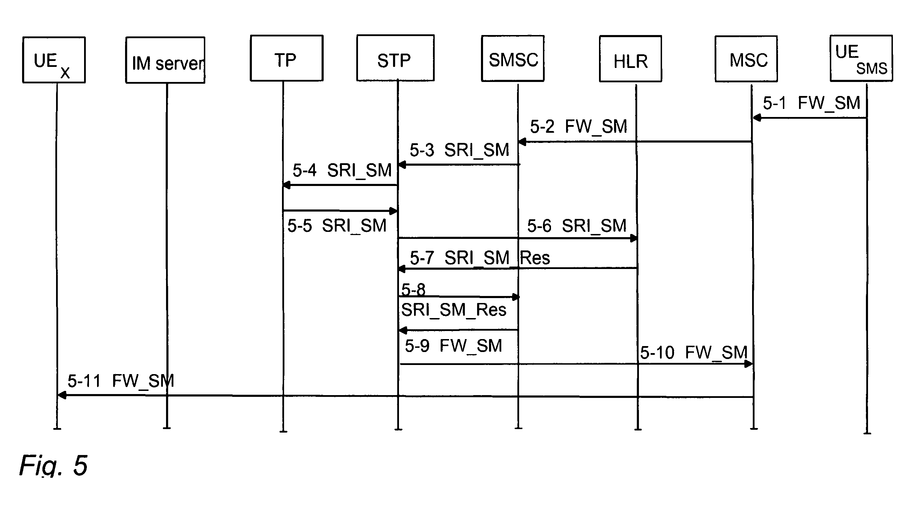

Figure 5 illustrates signalling according to a fourth embodiment of the present invention. If a second user terminal UEₓ is not provisioned for an IM service, the short message delivery process proceeds as described above in connection with Figure 2, until the sendRoutinglnformationForSM message 5-4 is received in the transfer point TP (i.e. the messages 5-1 to 5-4 in Figure 4 correspond to the messages 2-1 to 2-4 in Figure 2, respectively). In Figure 5, if the receiver (i.e. UEₓ) is not provisioned for the IM service, the transfer point TP does not interrogate with the signalling, and the short message is delivered as usual. However, a change may be made to a TT value of the sendRoutinglnformationForSM message SRI SM that is returned 5-5 to STP, in order to avoid a loop. STP forwards 5-6 the SRI SM inquiry to HLR. HLR responds 5-7 to the inquiry by transmitting an SRI_SM_Res message to STP, and STP forwards 5-8 the response to SMSC. SMSC sends 5-9, 5-10, 5-11 the actual short message FW_SM, via STP and the serving MSC, to UEₓ, and receives a delivery notification (not shown in Figure 5).

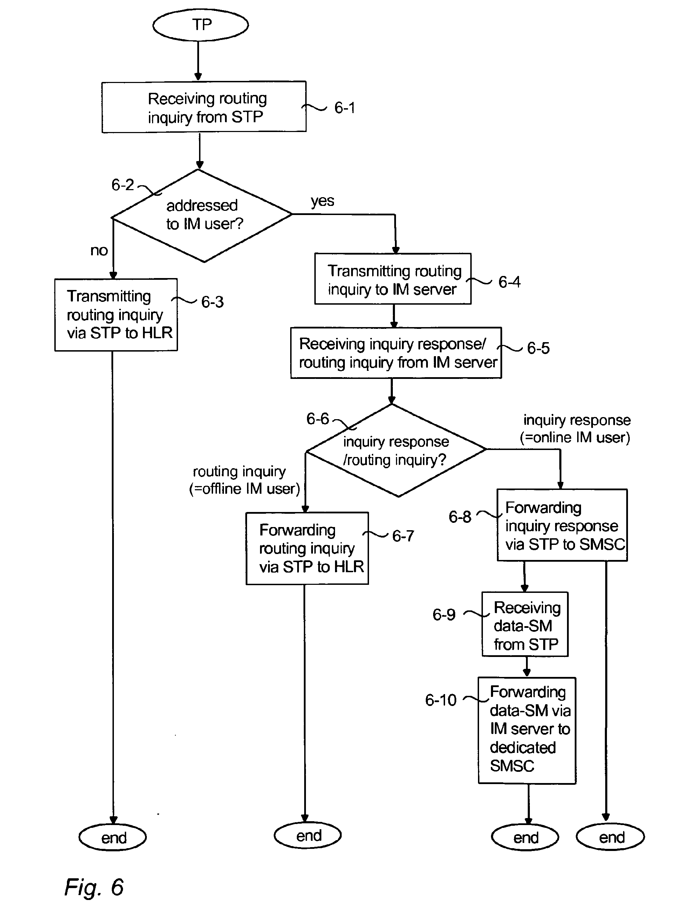

Figure 6 illustrates functioning of a network node acting as a transfer point TP according to the present invention. In Figure 6, in a process of a short message delivery from a first user terminal UE_{SMS} to a second user terminal UE_{IM} (or UEₓ), a sendRoutingInformationForSM inquiry SRI_SM is received 6-1 in the transfer point TP from a signalling transfer point STP. The transfer point TP is arranged to investigate 6-2 the received sendRoutinglnformationForSM inquiry, and based on the inquiry TP determines 6-2 [e.g. based on a called party address (CdPA) included in the SRI SM inquiry] whether or not the second user terminal to which the short message is addressed to, is an IM-capable user terminal. If it is not, TP is arranged to transmit the inquiry via STP to HLR. If the second user terminal is an IM-capable user terminal UE_{IM}. TP forwards 6-4 the SRI_SM request to the IM server. If the IM user terminal is offline, the SRI_SM request is returned 6-5, 6-6 from the IM server, after which it is forwarded 6-7 via STP to HLR. If the IM user terminal is online, an SRI_SM_Res message (including the address of the IM server) is received 6-5, 6-6 from the IM server. The SRI_SM_Res message is then forwarded 6-8 via STP to SMSC. In step 6-9, if the short message comprises a data short message, the transfer point TP receives the data short message and forwards it via the IM server to a dedicated SMSC.

The transfer point based approach according to the present invention enables implementation of FOMS with no need to modify existing network components. Also, the transfer point based approach offers a high level of interoperability, including delivery notifications. The transfer point based approach is easy to implement by purchasing the actual transfer points and making necessary configurations.

The signalling messages and steps shown in Figures 2, 3, 4, 5 and 6 are simplified and only aim at describing the idea of the invention. Other signalling messages may be sent and/or other functions carried out between the messages and/or the steps. The signalling messages serve only as examples and they may contain only some of the information mentioned above. The messages may also include other information, and the titles of the messages may deviate from those given above.

In addition to prior art means, a system or system network nodes that implement the functionality of the invention comprise means for processing short messages and/or routing data in a manner described above. Existing network nodes and user terminals comprise processors and memory that can be utilized in the operations of the invention. Any changes needed in implementing the invention may be carried out using supplements or updates of software routines and/or routines included in application specific integrated circuits (ASIC) and/or programmable circuits, such as EPLDs (Electrically Programmable Logic Device) or FPGAs (Field Programmable Gate Array).

It will be obvious to a person skilled in the art that as technology advances, the inventive concept can be implemented in various ways. The invention and its embodiments are not limited to the examples described above but may vary within the scope of the claims.

## Claims

1. A method for managing message transmission in a communications system (S), the system (S) comprising
a first user terminal (UE_{SMS}) capable of using a short message service, and
a short message centre (SMSC) for delivering short messages in the system (S),
the method comprising receiving, in a short message centre (SMSC), a short message transmitted by the first user terminal (UE_{SMS}), the short message being addressed to a second user terminal (UE_{IM}),
transmitting, based on the received short message, a routing information inquiry from the short message centre (SMSC) to a signalling transfer node (STP);
forwarding the routing information inquiry from the signalling transfer node (STP) to a transfer point (TP);
receiving the routing information inquiry in the transfer point (TP), **characterized by**
checking, in the transfer point (TP), on the basis of the received routing information inquiry, whether or not said second user terminal (UE_{IM}) is capable of using an instant messaging service;
wherein, if the second user terminal (UE_{IM}) is capable of using the instant messaging service, the method further comprises
forwarding the routing information inquiry from the transfer point (TP) to an instant messaging server (IM server); and
checking, in the instant messaging server (IM server), whether or not said second user terminal (UE_{IM}) is currently online;
wherein, if said second user terminal (UE_{IM}) is currently online, the method further comprises
transmitting, from the instant messaging server (IM server) to the transfer point (TP), an online routing information response including routing information on the instant messaging server (IM server).

2. A method according to claim 1, **characterized by**
forwarding the online routing information response from the transfer point (TP) via the signalling transfer node (STP) to the short message centre (SMSC); and
transmitting the short message from the short message centre (SMSC) to the instant messaging server (IM server) to be transmitted to the second user terminal (UE_{IM}).

3. A method according to claim 2, **characterized by** transmitting the short message from the short message centre (SMSC) via the signalling transfer node (STP) and the transfer point (TP) to the instant messaging server (IM server) to be transmitted to the second user terminal (UE_{IM}).

4. A method according to claim 1, 2 or 3, **characterized by** utilizing the routing information included in the online routing information response for transmitting said short message to the second user terminal (UE_{IM}).

5. A method as claimed in any one of claims 1 to 4, **characterized in that** the checking whether or not said second user terminal (UE_{IM}) is capable of using an instant messaging service is based on a called party address CdPA included in the routing information inquiry.

6. A method as claimed in claim 1 or 5, **characterized in that** if the second user terminal (UE_{IM}) is currently offline, the method comprises transmitting the routing information inquiry from the instant messaging server (IM server), via the transfer point (TP) and the signalling transfer point (TP), to a home location register (HLR).

7. A method as claimed in claim 6, **characterized by** transmitting an offline routing information response from the home location register (HLR) via the signalling transfer point (STP) to the short message centre (SMSC); and
returning, based on the offline routing information response, the short message from the short message centre (SMSC) to a switching centre (MSC).

8. A method as claimed in claim 1 or 5, **characterized in that** if the short message comprises a data short message, the method comprises transmitting the data short message from the instant messaging server (IM server) to a dedicated network node (dedicated SMSC).

9. A method as claimed in claim 8, **characterized by**
transmitting a data routing inquiry from the dedicated network node (dedicated SMSC) via the signalling transfer point (STP) to the home location centre (HLR); and
transmitting, based on the data routing inquiry, a data routing response from the home location centre (HLR) via the signalling transfer point (STP) to the dedicated network node (dedicated SMSC).

10. A method as claimed in claim 8 or 9, **characterized by** returning, based on the data routing response, the data short message from the dedicated network node (dedicated SMSC) to a switching centre (MSC) to be transmitted to the second user terminal (UE_{IM}).

11. A method as claimed in claim 1 or 5, **characterized in that** if the second user terminal (UEₓ) is not capable of using the instant messaging service, the method comprises
returning the routing information inquiry from the transfer point (TP) via the signalling transfer point (TP) to the home location register (HLR); and
transmitting a legacy routing response from the home location register (HLR) via the signalling transfer point (STP) to the short message centre (SMSC).

12. A method as claimed in claim 11, **characterized by** transmitting, based on the legacy routing response, the short message from the short message centre (SMSC) via the signalling transfer point (STP) to a switching centre (MSC) to be transmitted to the second user terminal (UEₓ).

13. A method as claimed in any one of claims 1 to 12, **characterized by** interrogating, before transmitting the short message to the instant messaging server (IM server), whether or not the second user terminal (UE_{IM}) is capable of using the instant messaging service.

14. A method as claimed in any one of claims 1 to 13, **characterized by** providing transmission of a short message from an SMS user terminal (UE_{SMS}) to an IM user terminal (UE_{IM}).

15. A communications system (S) comprising
a first user terminal (UE_{SMS}) capable of using a short message service, and
a short message centre (SMSC) capable of delivering short messages in the system (S), wherein the short message centre is configured to receive a short message transmitted by the first user terminal (UE_{SMS}), the short message being addressed to a second user terminal (UE_{IM}),
whereby the system (S) is configured to
transmit, based on the short message received in the short message centre (SMSC), a routing information inquiry to a signalling transfer node (STP);
forward, the routing information inquiry from the signalling transfer node (STP) to a transfer point (TP); **characterized in that** the system is configured to
check, in the transfer point (TP), based on the routing information inquiry received in the transfer point (TP), whether or not said second user terminal (UE_{IM}) is capable of using an instant messaging service;
wherein, if the second user terminal (UE_{IM}) is capable of using the instant messaging service, the system (S) is further configured to
forward the routing information inquiry from the transfer point (TP) to an instant messaging server (IM server); and
check, in the instant messaging server (IM server), whether or not said second user terminal (UE_{IM}) is currently online;
wherein, if said second user terminal (UE_{IM}) is currently online, the system (S) is further configured to
transmit, from the instant messaging server (IM server) to the transfer point (TP), an online routing information response including routing information on the instant messaging server (IM server).

16. A communications system according to claim 15, **characterized in that** it is configured to
forward the online routing information response from the transfer point (TP) via the signalling transfer node (STP) to the short message centre (SMSC); and
transmit the short message from the short message centre (SMSC) to the instant messaging server (IM server) to be transmitted to the second user terminal (UE_{IM}).

17. A communications system according to claim 16, **characterized in that** it is configured to transmit the short message from the short message centre (SMSC) via the signalling transfer node (STP) and the transfer point (TP) to the instant messaging server (IM server) to be transmitted to the second user terminal (UE_{IM}).

18. A communications system according to claim 15, 16 or 17, **characterized in that** it is configured to utilize the routing information included in the online routing information response for transmitting said short message to the second user terminal (UE_{IM}).

19. A communications system as claimed in any one of claims 15 to 18, **characterized in that** it is configured to check whether or not said second user terminal (UE_{IM}) is capable of using an instant messaging service, based on a called party address CdPA included in the routing information inquiry.

20. A communications system as claimed in claim 15 or 19, **characterized in that** if the second user terminal (UE_{IM}) is currently offline, the system (S) is configured to transmit the routing information inquiry from the instant messaging server (IM server), via the transfer point (TP) and the signalling transfer point (TP), to a home location register (HLR).

21. A communications system as claimed in claim 20, **characterized in that** it is configured to
transmit an offline routing information response from the home location register (HLR) via the signalling transfer point (STP) to the short message centre (SMSC); and
return, based on the offline routing information response, the short message from the short message centre (SMSC) to a switching centre (MSC).

22. A communications system as claimed in claim 15 or 19, **characterized in that** if the short message comprises a data short message, the system (S) is configured to transmit the data short message from the instant messaging server (IM server) to a dedicated network node (dedicated SMSC).

23. A communications system as claimed in claim 22, **characterized in that** it is configured to
transmit a data routing inquiry from the dedicated network node (dedicated SMSC) via the signalling transfer point (STP) to the home location centre (HLR); and
transmit, based on the data routing inquiry, a data routing response from the home location centre (HLR) via the signalling transfer point (STP) to the dedicated network node (dedicated SMSC).

24. A communications system as claimed in claim 22 or 23, **characterized in that** it is configured to transmit, based on the data routing response, the data short message from the dedicated network node (dedicated SMSC) to a switching centre (MSC) to be transmitted to the second user terminal (UE_{IM}).

25. A communications system as claimed in claim 15 or 19, **characterized in that** if the second user terminal (UEₓ) is not capable of using the instant messaging service, the system (S) is configured to
return the routing information inquiry from the transfer point (TP) via the signalling transfer point (TP) to the home location register (HLR); and
transmit a legacy routing response from the home location register (HLR) via the signalling transfer point (STP) to the short message centre (SMSC).

26. A communications system as claimed in claim 25, **characterized in that** it is configured to transmit, based on the legacy routing response, the short message from the short message centre (SMSC) via the signalling transfer point (STP) to a switching centre (MSC) to be transmitted to the second user terminal (UEₓ).

27. A communications system as claimed in any of claims 15 to 26, **characterized in that** it is configured to interrogate, before transmitting the short message to the instant messaging server (IM server), whether or not the second user terminal (UE_{IM}) is capable of using the instant messaging service.

## Patentansprüche

1. Verfahren zum Bewerkstelligen einer Nachrichtenübertragung in einem Kommunikationssystem (S), das System (S) umfassend
ein erstes Benutzerendgerät (UE_{SMS}), das in der Lage ist, einen Kurznachrichtendienst zu verwenden, und
ein Kurznachrichtenzentrum (SMSC) zum Zustellen von Kurznachrichten in dem System (S),
das Verfahren umfassend Empfangen, in einem Kurznachrichtenzentrum (SMSC), einer durch das erste Benutzerendgerät (UE_{SMS}) gesendeten Kurznachricht, wobei die Kurznachricht an ein zweites Benutzerendgerät (UE_{IM}) adressiert ist,
Senden, auf der Grundlage der empfangenen Kurznachricht, einer Verkehrslenkinformationsanfrage von dem Kurznachrichtenzentrum (SMSC) zu einem Signalisierungstransferknoten (STP);
Weiterleiten der Verkehrslenkinformationsanfrage von dem Signalisierungstransferknoten (STP) zu einem Transferpunkt (TP);
Empfangen der Verkehrslenkinformationsanfrage in dem Transferpunkt (TP),
**gekennzeichnet durch**
Prüfen, in dem Transferpunkt (TP), auf der Grundlage der empfangenen Verkehrsienkinformationsanfrage, ob das zweite Benutzerendgerät (UE_{IM}) in der Lage ist oder nicht, einen Instant- Nachrichtendienst zu verwenden;
wobei, falls das zweite Benutzerendgerät (UE_{IM}) zum Verwenden des Instant- Nachrichtendiensts in der Lage ist, das Verfahren weiterhin umfasst
Weiterleiten der Verkehrslenkinformationsanfrage von dem Transferpunkt (TP) zu einem Instant- Nachrichtenserver (IM- Server); und
Prüfen, in dem Instant- Nachrichtenserver (IM- Server), ob das zweite Benutzerendgerät (UE_{IM}) momentan online ist oder nicht;
wobei, falls das zweite Benutzerendgerät (UE_{IM}) momentan online ist, das Verfahren weiterhin umfasst
Senden, von dem Instant- Nachrichtenserver (IM- Server) zu dem Transferpunkt (TP), einer Online- Verkehrslenkinformationsantwort, die Verkehrslenkinformationen bezüglich des Instant- Nachrichtenservers (IM- Server) umfasst.

2. Verfahren gemäß Anspruch 1, **gekennzeichnet durch**
Weiterleiten der Online- Verkehrslenkinformationsantwort von dem Transferpunkt (TP) über den Signalisierungstransferknoten (STP) zu dem Kurznachrichtenzentrum (SMSC); und
Senden der Kurznachricht von dem Kurznachrichtenzentrum (SMSC) zu dem Instant- Nachrichtenserver (IM- Server), um zu dem zweiten Benutzerendgerät (UE_{IM}) gesendet zu werden.

3. Verfahren gemäß Anspruch 2, **gekennzeichnet durch** Senden der Kurznachricht von dem Kurznachrichtenzentrum (SMSC) über den Signalisierungstransferknoten (STP) und den Transferpunkt (TP) zu dem Instant- Nachrichtenserver (IM- Server), um zu dem zweiten Benutzerendgerät (UE_{IM}) gesendet zu werden.

4. Verfahren gemäß Anspruch 1, 2 oder 3, **gekennzeichnet durch** Verwenden der Verkehrsienkinformationen, die von der Online- Verkehrslenkinformationsantwort umfasst sind, zum Senden der Kurznachricht zu dem zweiten Benutzerendgerät (UE_{IM}).

5. Verfahren gemäß zumindest einem der Ansprüche 1 bis 4, **dadurch gekennzeichnet, dass** das Prüfen, ob das zweite Benutzerendgerät (UE_{IM}) in der Lage ist, einen Instant- Nachrichtendienst zu verwenden, oder nicht, auf einer Adresse einer angerufenen Partel CdPA basiert, die von der Verkehrsienkinformationsanfrage umfasst ist.

6. Verfahren gemäß Anspruch 1 oder 5, **dadurch gekennzeichnet, dass** falls das zweite Benutzerendgerät (UE_{IM}) momentan offline ist, das Verfahren Senden der Verkehrslenkinformationsanfrage von dem Instant- Nachrichtenserver (IM-Server) über den Transferpunkt (TP) und den Signalisierungstransferpunkt (TP) zu einem Heimatregister (HLR) umfasst.

7. Verfahren gemäß Anspruch 6, **gekennzeichnet durch**
Senden einer Offline- Verkehrsienkinformationsantwort von dem Heimatregister (HLR) über den Signalisierungstransferpunkt (STP) zu dem Kurznachrichtenzentrum (SMSC); und
Zurückgeben, auf der Grundlage der Offline- Verkehrsienkinformationsantwort, der Kurznachricht von dem Kurznachrichtenzentrum (SMSC) zu einem Vermittlungszentrum (MSC).

8. Verfahren gemäß Anspruch 1 oder 5, **dadurch gekennzeichnet, dass** falls die Kurznachricht eine Datenkurznachricht umfasst, das Verfahren Senden der Datenkurznachricht von dem Instant- Nachrichtenserver (IM- Server) zu einem ausgewiesenen Netzwerkknoten (ausgewiesener SMSC) umfasst.

9. Verfahren gemäß Anspruch 8, **gekennzeichnet durch**
Senden einer Datenverkehrslenkanfrage von dem ausgewiesenen Netzwerkknoten (ausgewiesener SMSC) über den Signalisierungstransferpunkt (STP) zu dem Heimatregister (VLR); und
Senden, auf der Grundlage der Datenverkehrslenkanfrage, einer Datenverkehrslenkantwort von dem Heimatregister (HLR) über den Signalisierungstransferpunkt (STP) zu dem ausgewiesenen Netzwerkknoten (ausgewiesener SMSC).

10. Verfahren gemäß Anspruch 8 oder 9, **gekennzeichnet durch** Zurückgeben, auf der Grundlage der Datenverkehrslenkantwort, der Datenkurznachricht von dem ausgewiesenen Netzwerkknoten (ausgewiesener SMSC) zu einem Vermittlungszentrum (MSC), um zu dem zweiten Benutzerendgerät (UE_{IM}) gesendet zu werden.

11. Verfahren gemäß Anspruch 1 oder 5, **dadurch gekennzeichnet, dass** falls das zweite Benutzerendgerät (UEₓ) nicht in der Lage ist, den Instant- Nachrichtendienst zu verwenden, das Verfahren umfasst
Zurückgeben der Verkehrslenkinformationsanfrage von dem Transferpunkt (TP) über den Signalisierungstransferpunkt (TP) zu dem Heimatregister (HLR); und
Senden einer vormaligen Verkehrslenkantwort von dem Heimatregister (HLR) über den Signalisierungstransferpunkt (STP) zu dem Kurznachrichtenzentrum (SMSC).

12. Verfahren gemäß Anspruch 11, **gekennzeichnet durch** Senden, auf der Grundlage der vormaligen Verkehrslenkantwort, der Kurznachricht von dem Kurznachrichtenzentrum (SMSC) über den Signalisierungstransferpunkt (STP) zu einem Vermittlungszentrum (MSC), um zu dem zweiten Benutzerendgerät (UEₓ) gesendet zu werden.

13. Verfahren gemäß zumindest einem der Ansprüche 1 bis 12, **gekennzeichnet durch** Abfragen, vor dem Senden der Kurznachricht zu dem Instant- Nachrichtenserver (IM- Server), ob das zweite Benutzerendgerät (HE_{IM}) in der Lage ist, den Instant- Nachrichtendienst zu verwenden, oder nicht.

14. Verfahren gemäß zumindest einem der Ansprüche 1 bis 13, **gekennzeichnet durch** Bereitstellen des Sendens einer Kurznachricht von einem SMS- Benutzerendgerät (UE_{SMS}) zu einem IM- Benutzerendgerät (UE_{IM}).

15. Kommunikationssystem (S), umfassend
ein erstes Benutzerendgerät (UE_{SMS}), das in der Lage ist, einen Kurznachrichtendienst zu verwenden, und
ein Kurznachrichtenzentrum (SMSC), das in der Lage ist, Kurznachrichten in dem System (S) zuzustellen, wobei das Kurznachrichtenzentrum konfiguriert ist, um eine von dem ersten Benutzerendgerät (UE_{SMS}) gesendete Kurznachricht zu empfangen, wobei die Kurznachricht an ein zweites Benutzerendgerät (UE_{IM}) adressiert ist,
wobei das System (S) konfiguriert ist, um
auf der Grundlage der in dem Kurznachrichtenzentrum (SMSC) empfangenen Kurznachricht eine Verkehrslenkinformationsanfrage zu einem Signalisierungstransferknoten (STP) zu senden;
die Verkehrsienkinformationsanfrage von dem Signalisierungstransferknoten (STP) zu einem Transferpunkt (TP) weiterzuleiten;
**dadurch gekennzeichnet, dass** das System konfiguriert ist, um
in dem Transferpunkt (TP) auf der Grundlage der in dem Transferpunkt (TP) empfangenen Verkehrslenkinformationsanfrage zu prüfen, ob das zweite Benutzerendgerät (UE_{IM}) in der Lage ist, einen Instant- Nachrichtendienst zu verwenden, oder nicht;
wobei, falls das zweite Benutzerendgerät (UE_{IM}) in der Lage ist, den Instant- Nachrichtendienst zu verwenden, das System (S) weiterhin konfiguriert ist, um
die Verkehrslenkinformationsanfrage von dem Transferpunkt (TP) zu einem Instant- Nachrichtenserver (IM- Server) weiterzuleiten; und
in dem Instant- Nachrichtenserver (IM- Server) zu prüfen, ob das zweite Benutzerendgerät (UE_{IM}) momentan online ist oder nicht;
wobei, falls das zweite Benutzerendgerät (UE_{IM}) momentan online ist, das System (S) weiterhin konfiguriert ist, um
von dem Instant- Nachrichtenserver (IM- Server) zu dem Transferpunkt (TP) eine Online- Verkehrslenkinformationsantwort zu senden, die Verkehrslenkinformationen bezüglich des Instant- Nachrichtenservers (IM- Server) umfasst.

16. Kommunikationssystem gemäß Anspruch 15, **dadurch gekennzeichnet, dass** es konfiguriert ist, um
die Online- Verkehrslenkinformationsantwort von dem Transferpunkt (TP) über den Signalisierungstransferknoten (STP) zu dem Kurznachrichtenzentrum (SMSC) weiterzuleiten; und
die Kurznachricht von dem Kurznachrichtenzentrum (SMSC) zu dem Instant- Nachrichtenserver (IM- Server) zu senden, um zu dem zweiten Benutzerendgerät (UE_{IM}) gesendet zu werden.

17. Kommunikationssystem gemäß Anspruch 16, **dadurch gekennzeichnet, dass** es konfiguriert ist, um die Kurznachricht von dem Kurznachrichtenzentrum (SMSC) über den Signalisierungstransferknoten (STP) und den Transferpunkt (TP) zu dem Instant- Nachrichtenserver (IM- Server) zu senden, um zu dem zweiten Benutzerendgerät (UE_{IM}) gesendet zu werden.

18. Kommunikationssystem gemäß Anspruch 15, 16 oder 17, **dadurch gekennzeichnet, dass** es konfiguriert ist, um die von der Online- Verkehrslenkinformationsantwort umfassten Verkehrslenkinformationen zum Senden der Kurznachricht zu dem zweiten Benutzerendgerät (UE_{IM}) zu verwenden.

19. Kommunikationssystem gemäß zumindest einem der Ansprüche 15 bis 18, **dadurch gekennzeichnet, dass** es konfiguriert ist, um zu prüfen, ob das zweite Benutzerendgerät (UE_{IM}) in der Lage ist oder nicht, einen Instant- Nachrichtendienst zu verwenden, auf der Grundlage einer Adresse einer angerufenen Parte CdPA, die von der Verkehrslenkinformationsanfrage umfasst ist.

20. Kommunikationssystem gemäß Anspruch 15 oder 19, **dadurch gekennzeichnet, dass** falls das zweite Benutzerendgerät (UE_{IM}) momentan offline ist, das System (S) konfiguriert ist, um die Verkehrsienkinformationsanfrage von dem Instant- Nachrichtenserver (IM- Server) über den Transferpunkt (TP) und den Signalisierungstransferpunkt (TP) zu einem Heimatregister (HLR) zu senden.

21. Kommunikationssystem gemäß Anspruch 20, **dadurch gekennzeichnet, dass** es konfiguriert ist, um
eine Offline- Verkehrsienkinformationsantwort von dem Heimatregister (HLR) über den Signalisierungstransferpunkt (STP) zu dem Kurznachrichtenzentrum (SMSC) zu senden; und
auf der Grundlage der Offline- Verkehrslenkinformationsantwort die Kurznachricht von den Kurznachrichtenzentrum (SMSC) zu einem Vermittlungszentrum (MSC) zurück zu geben.

22. Kommunikationssystem gemäß Anspruch 15 oder 19, **dadurch gekennzeichnet, dass** falls die Kurznachricht eine Datenkurznachricht umfasst das System (S) konfiguriert ist, um die Datenkurznachricht von dem Instant-Nachrichtenserver (IM- Server) zu einem ausgewiesenen Netzwerkknoten (ausgewiesener SMSC) zu senden.

23. Kommunikationssystem gemäß Anspruch 22, **dadurch gekennzeichnet, dass** es konfiguriert ist, um
eine Datenverkehrslenkanfrage von dem ausgewiesenen Netzwerkknoten (ausgewiesenen SMSC) über den Signalisierungstransferpunkt (STP) zu dem Heimatregister (HLR) zu senden; und
auf der Grundlage der Datenverkehrslenkanfrage eine Datenverkehrslenkantwort von dem Heimatregister (HLR) über den Signalisierungstransferpunkt (STP) zu dem ausgewiesenen Netzwerkknoten (ausgewiesener SMSC) zu senden.

24. Kommunikationssystem gemäß Anspruch 22 oder 23, **dadurch gekennzeichnet, dass** es konfiguriert ist, um auf der Grundlage der Datenverkehrslenkantwort die Datenkurznachricht von dem ausgewiesenen Netzwerkknoten (ausgewiesener SMSC) zu einem Vermittlungszentrum (MSC) zu senden, um zu dem zweiten Benutzerendgerät (UE_{IM}) gesendet zu werden.

25. Kommunikationssystem gemäß Anspruch 15 oder 19, **dadurch gekennzeichnet, dass** falls das zweite Benutzerendgerät (UEₓ) nicht in der Lage ist, den Instant- Nachrichtendienst zu verwenden, das System (S) konfiguriert ist, um
die Verkehrsienkinformationsanfrage von dem Transferpunkt (TP) über den Signalisierungstransferpunkt (STP) zu dem Heimatregister (HLR) zurück zu geben; und
eine vormalige Verkehrsienkantwort von dem Heimatregister (HLR) über den Signalisierungstransferpunkt (STP) zu dem Kurznachrichtenzentrum (SMSC) zu senden.

26. Kommunikationssystem gemäß Anspruch 25, **dadurch gekennzeichnet, dass** es konfiguriert ist, um auf der Grundlage der vormaligen Verkehrslenkantwort die Kurznachricht von dem Kurznachrichtenzentrum (SMSC) über den Signalisierungstransferpunkt (STP) zu einem Vermittlungszentrum (MSC) zu senden, um zu dem zweiten Benutzerendgerät (UEₓ) gesendet zu werden.

27. Kommunikationssystem gemäß zumindest einem der Ansprüche 15 bis 26, **dadurch gekennzeichnet, dass** es konfiguriert ist, um vor dem Senden der Kurznachricht zu dem Instant- Nachrichtenserver (IM- Server) nachzufragen, ob das zweite Benutzerendgerät (UE_{IM}) in der Lage ist, den Instant- Nachrichtendienst zu verwenden, oder nicht.

## Revendications

1. Procédé de gestion de la transmission de messages dans un système de communication (S), le système (S) comprenant
un premier terminal d'utilisateur (UE_{SMS}) capable d'utiliser un service de messages courts, et
un centre de messages courts (SMSC) destiné à délivrer des messages courts dans le système (S),
le procédé consistant à recevoir, dans un centre de messages courts (SMSC), un message court transmis par le premier terminal d'utilisateur (UE_{SMS}), le message court étant adressé à un second terminal d'utilisateur (UE_{IM}),
transmettre, sur la base du message court reçu, une demande d'informations de routage depuis le centre de messages courts (SMSC) vers un noeud de transfert de signalisation (STP) ;
transférer la demande d'informations de routage depuis le noeud de transfert de signalisation (STP) vers un point de transfert (TP) ;
recevoir la demande d'informations de routage dans le point de transfert (TP) ;
**caractérisé en ce qu'**il consiste à
vérifier, dans le point de transfert (TP), sur la base de la demande d'informations de routage reçue, si ledit second terminal d'utilisateur (UE_{IM}) est ou n'est pas capable d'utiliser un service de messagerie instantanée ;
où, si le second terminal d'utilisateur (UE_{IM}) est capable d'utiliser le service de messagerie instantanée, le procédé consiste en outre à
transférer la demande d'informations de routage du point de transfert (TP) vers un serveur de messagerie instantanée (serveur IM) ; et
vérifier, dans le serveur de messagerie instantanée (serveur IM), si ledit second terminal d'utilisateur (UE_{IM}) est ou n'est pas en ligne actuellement ;
où, si ledit second terminal d'utilisateur (UE_{IM}) est en ligne actuellement, le procédé consiste en outre à
transmettre, depuis le serveur de messagerie instantanée (serveur IM) au point de transfert (TP), une réponse d'informations de routage en ligne contenant des informations de routage sur le serveur de messagerie instantanée (serveur IM).

2. Procédé selon la revendication 1, **caractérisé en ce qu'**il consiste à
transférer la réponse d'informations de routage en ligne depuis le point de transfert (TP) via le noeud de transfert de signalisation (STP) jusqu'au centre de messages courts (SMSC) ; et
transmettre le message court du centre de messages courts (SMSC) au serveur de messagerie instantanée (serveur IM) pour qu'il soit transmis au second terminal d'utilisateur (UE_{IM}) .

3. Procédé selon la revendication 2, **caractérisé en ce qu'**il consiste à transmettre le message court depuis le centre de messages courts (SMSC) via le noeud de transfert de signalisation (STP) et le point de transfert (TP) jusqu'au serveur de messagerie instantanée (serveur IM) pour qu'il soit transmis au second terminal d'utilisateur (UE_{IM}).

4. Procédé selon la revendication 1, 2 ou 3, **caractérisé en ce qu'**il consiste à utiliser les informations de routage contenues dans la réponse d'informations de routage en ligne pour la transmission dudit message court au second terminal d'utilisateur (UE_{IM}).

5. Procédé selon l'une quelconque des revendications 1 à 4, **caractérisé en ce que** la vérification du fait que ledit second terminal d'utilisateur (UE_{IM}) est capable ou n'est pas capable d'utiliser un service de messagerie instantanée est basée sur une adresse d'abonné appelé CdPA contenue dans la demande d'informations de routage.

6. Procédé selon la revendication 1 ou 5, **caractérisé en ce que** si le second terminal d'utilisateur (UE_{IM}) est actuellement hors ligne, le procédé consiste à transmettre la demande d'informations de routage depuis le serveur de messagerie instantanée (serveur IM), via le point de transfert (TP) et le point de transfert (TP) de signalisation, jusqu'à un registre des abonnés locaux (HLR).

7. Procédé selon la revendication 6, **caractérisé en ce qu'**il consiste à
transmettre une réponse d'informations de routage hors ligne depuis le registre des abonnés locaux (HLR) via le point de transfert de signalisation (STP) jusqu'au centre de messages courts (SMSC) ; et
renvoyer, sur la base de la réponse d'informations de routage hors ligne, le message court depuis le centre de messages courts (SMSC) vers un centre téléphonique (MSC).

8. Procédé selon la revendication 1 ou 5, **caractérisé en ce que** si le message court comprend un message court de données, le procédé consiste à transmettre le message court de données depuis le serveur de messagerie instantanée (serveur IM) jusqu'à un noeud de réseau spécialisé (SMSC spécialisé).

9. Procédé selon la revendication 8, **caractérisé en ce qu'**il consiste à
transmettre une demande de routage de données depuis le noeud de réseau spécialisé (SMSC spécialisé) via le point de transfert de signalisation (STP) jusqu'au centre des abonnés locaux ; et
transmettre, sur la base d'une demande de routage de données, une réponse de routage de données depuis le centre des abonnés locaux (HLR) via le point de transfert de signalisation (STP) jusqu'au noeud de réseau spécialisé (SMSC spécialisé).

10. Procédé selon la revendication 8 ou 9, **caractérisé en ce qu'**il consiste à renvoyer, sur la base de la réponse de routage de données, le message court de données depuis le noeud de réseau spécialisé (SMSC spécialisé) vers un centre téléphonique (MSC) pour qu'il soit transmis au second terminal d'utilisateur (UE_{IM}) .

11. Procédé selon la revendication 1 ou 5, **caractérisé en ce que** si le second terminal d'utilisateur (UEₓ) n'est pas capable d'utiliser le service de messagerie instantanée, le procédé consiste à
renvoyer la demande d'informations de routage depuis le point de transfert (TP) via le point de transfert de signalisation (TP) jusqu'au registre des abonnés locaux (HLR) ; et
transmettre une réponse de routage traditionnel depuis le registre des abonnés locaux (HLR) via le point de transfert de signalisation (STP) jusqu'au centre de messages courts (SMSC).

12. Procédé selon la revendication 11, **caractérisé en ce qu'**il consiste à transmettre, sur la base de la réponse de routage traditionnel, le message court depuis le centre de messages courts (SMSC) via le point de transfert de signalisation (STP) jusqu'à un centre téléphonique (MSC) pour qu'il soit transmis au second terminal d'utilisateur (UEₓ).

13. Procédé selon l'une quelconque des revendications 1 à 12, **caractérisé en ce qu'**il consiste à procéder à une interrogation, avant transmission du message court au serveur de messagerie instantanée (serveur IM), pour savoir si le second terminal d'utilisateur (UE_{IM}) est ou n'est pas capable d'utiliser le service de messagerie instantané.

14. Procédé selon l'une quelconque des revendications 1 à 13, **caractérisé en ce qu'**il consiste à assurer la transmission d'un message court depuis un terminal d'utilisateur de SMS (UE_{SMS}) vers un terminal d'utilisateur IM (UE_{IM}) .

15. Système de communication (S) comprenant
un premier terminal d'utilisateur (UE_{SMS}) capable d'utiliser un service de messages courts, et
un centre de messages courts (SMSC) capable de délivrer des messages courts dans le système (S), le centre de messages courts étant configuré pour recevoir un message court transmis par le premier terminal d'utilisateur (UE_{SMS}), le message court étant adressé à un second terminal d'utilisateur (UE_{IM}),
moyennant quoi le système (S) est configuré pour transmettre, sur la base du message court reçu dans le centre de messages courts (SMSC), une demande d'informations de routage à un noeud de transfert de signalisation (STP) ;
transférer la demande d'informations de routage depuis le noeud de transfert de signalisation (STP) jusqu'à un point de transfert (TP) ; **caractérisé en ce que** le système est configuré pour
vérifier, dans le point de transfert (TP), sur la base de la demande d'informations de routage reçue dans le point de transfert (TP), si ledit second terminal d'utilisateur (UE_{IM}) est ou n'est pas capable d'utiliser un service de messagerie instantanée ;
où, si le second terminal d'utilisateur (UE_{IM}) est capable d'utiliser le service de messagerie instantanée, le système (S) est en outre configuré pour
transférer la demande d'informations de routage depuis le point de transfert (TP) jusqu'à un serveur de messagerie instantanée (serveur IM) ; et
vérifier, dans le serveur de messagerie instantanée (serveur IM), si ledit second terminal d'utilisateur (UE_{IM}) est actuellement en ligne ou non ;
où, si ledit second terminal d'utilisateur (UE_{IM}) est actuellement en ligne, le système (S) est en outre configuré pour
transmettre, depuis le serveur de messagerie instantanée (serveur IM) jusqu'au point de transfert (TP), une réponse d'informations de routage en ligne contenant des données de routage sur le serveur de messagerie instantanée (serveur IM).

16. Système de communication selon la revendication 15, **caractérisé en ce qu'**il est configuré pour
transférer la réponse d'informations de routage en ligne depuis le point de transfert (TP) via le noeud de transfert de signalisation (STP) jusqu'au centre de messages courts (SMSC) ; et
transmettre le message court depuis le centre de messages courts (SMSC) jusqu'au serveur de messagerie instantanée (serveur IM) pour qu'il soit transmis au second terminal d'utilisateur (UE_{IM}).

17. Système de communication selon la revendication 16, **caractérisé en ce qu'**il est configuré pour transmettre le message court depuis le centre de messages courts (SMSC) via le noeud de transfert de signalisation (STP) et le point de transfert (TP) jusqu'au serveur de messagerie instantanée (serveur IM) pour qu'il soit transmis au second terminal d'utilisateur (UE_{IM}) .

18. Système de communication selon la revendication 15, 16 ou 17, **caractérisé en ce qu'**il est configuré pour utiliser les informations de routage contenues dans la réponse d'informations de routage en ligne pour transmettre ledit message court au second terminal d'utilisateur (UE_{IM}) .

19. Système de communication selon l'une quelconque des revendications 15 à 18, **caractérisé en ce qu'**il est configuré pour vérifier si ledit second terminal d'utilisateur (UE_{IM}) est ou n'est pas capable d'utiliser un service de messagerie instantanée, sur la base d'une adresse d'abonné appelé CdPA contenue dans la demande d'informations de routage.

20. Système de communication selon la revendication 15 ou 19, **caractérisé en ce que** si le second terminal d'utilisateur (UE_{IM}) est actuellement hors ligne, le système (S) est configuré pour transmettre la demande d'informations de routage depuis le serveur de messagerie instantanée (serveur IM), via le point de transfert (TP) et le point de transfert de signalisation (TP), jusqu'à un registre des abonnés locaux (HLR).

21. Système de communication selon la revendication 20, **caractérisé en ce qu'**il est configuré pour
transmettre une réponse de données de routage hors ligne depuis le registre des abonnés locaux (HLR) via le point de transfert de signalisation (STP) jusqu'au centre de messages courts (SMSC) ; et
renvoyer, sur la base de la réponse de données de routage hors ligne, le message court depuis le centre de messages courts (SMSC) jusqu'à un centre téléphonique (MSC).

22. Système de communication selon la revendication 15 ou 19, **caractérisé en ce que** si le message court comprend un message court de données, le système (S) est configuré pour transmettre le message court de données depuis le serveur de messagerie instantanée (serveur IM) jusqu'à un noeud de réseau spécialisé (SMSC spécialisé) .

23. Système de communication selon la revendication 22, **caractérisé en ce qu'**il est configuré pour
transmettre une demande de routage de données depuis un noeud de réseau spécialisé (SMSC spécialisé) via le point de transfert de signalisation (STP) jusqu'à un centre des abonnés locaux (HLR) ; et
transmettre, sur la base de la demande de routage de données, une réponse de routage de données depuis un centre d'abonnés locaux (HLR) via le point de transfert de signalisation (STP) jusqu'au noeud de réseau spécialisé (SMSC spécialisé).

24. Système de communication selon la revendication 22 ou 23, **caractérisé en ce qu'**il est configuré pour transmettre, sur la base de la réponse de routage de données, le message court de données depuis un noeud de réseau spécialisé (SMSC spécialisé) jusqu'à un centre téléphonique (MSC) pour qu'il soit transmis au second terminal d'utilisateur (UE_{IM}) .

25. Système de communication selon la revendication 15 ou 19, **caractérisé en ce que** si le second terminal d'utilisateur (UEₓ) n'est pas capable d'utiliser le service de messagerie instantanée, le système (S) est configuré pour
renvoyer la demande d'informations de routage depuis le point de transfert (TP) via le point de transfert de signalisation (TP) jusqu'au registre des abonnés locaux (HLR) ; et
transmettre une réponse de routage traditionnel depuis un registre des abonnés locaux (HLR) via le point de transfert de signalisation (STP) jusqu'au centre de messages courts (SMSC).

26. Système de communication selon la revendication 25, **caractérisé en ce qu'**il est configuré pour transmettre, sur la base de la réponse de routage traditionnel, le message court depuis le centre de messages courts (SMSC) via le point de transfert de signalisation (STP) jusqu'à un centre téléphonique (MSC) pour qu'il soit transmis au second terminal d'utilisateur (UEₓ).

27. Système de communication selon l'une quelconque des revendications 15 à 26, **caractérisé en ce qu'**il est configuré pour procéder à une interrogation, avant transmission du message court au serveur de messagerie instantanée (serveur IM), pour savoir si le second terminal d'utilisateur (UE_{IM}) est ou n'est pas capable d'utiliser le service de messagerie instantanée.
